# FASCICULE DE BREVET EUROPEEN

(11) **EP 2 069 205 B1**
(45) Date de publication et mention de la délivrance du brevet: **17.08.2011**
(21) Numéro de dépôt: 07727952.9
(22) Date de dépôt: 10.04.2007
(51) Int. Cl.: B65B 9/02, B29C 65/00

(54) **PROCEDE ET DISPOSITIF DE FABRICATION DE CONDITIONNEMENTS INDIVIDUELS D'UN PRODUIT LIQUIDE, VISEQUEUX OU EN POUDRE A TRES HAUTE CADENCE**
VERFAHREN UND VORRICHTUNG ZUR HERSTELLUNG VON EINZELVERPACKUNGEN FÜR EIN FLÜSSIGES, DICKFÜSSIGES ODER PULVERFORMIGES PRODUKT MIT SEHR HOHER PRODUKTIONSRATE
PROCESS AND DEVICE FOR MANUFACTURING INDIVIDUAL PACKAGING FOR A LIQUID, VISCOUS, OR POWDER PRODUCT AT A VERY HIGH PRODUCTION RATE

(30) Priorité: 26.09.2006 US 847308 P
(43) Date de publication de la demande: 17.06.2009
(73) Titulaire: SA CRYOLOG, 92100 Boulogne Billancourt (FR)
(72) Inventeur: VAILLANT, Renaud, 94250 Gentilly (FR); PETEUIL, Pierre, 44310 Saint-Philbert-de-Grand-Lieu (FR)
(74) Mandataire: Beauvais, Emmanuelle
(86) Numéro de dépôt international: PCT/EP2007/053484
(87) Numéro de publication internationale: WO 2008/037505

(56) Documents cités:
- US-A- 3 222 235
- US-A- 3 874 963
- US-A- 4 063 101

## Description

La présente invention concerne un procédé de fabrication de conditionnements individuels d'un produit liquide ou solide à très haute cadence, ainsi que le dispositif mettant en oeuvre ce procédé.

Le procédé selon l'invention a pour objet la fabrication de conditionnements individuels d'un produit, le produit se présentant sous toute forme le rendant apte à être conditionné en sachet (liquide, semi-liquide, pâteux, poudres, granulés...) De tels conditionnements sont aujourd'hui utilisés dans des domaines extrêmement variés, tels que la cosmétique, la pharmacologie, l'agroalimentaire, etc.

Pour fabriquer de tels conditionnements, il est connu de nombreux procédés mettant en oeuvre l'assemblage hermétique d'un ou plusieurs film(s) emprisonnant une dose du produit conditionné. Par exemple, il est connu un procédé mettant en oeuvre les étapes suivantes : déroulement d'un film inférieur, dépose sur celui-ci de doses individuelles du produit devant être conditionné, plaquage d'un second film sur le premier, puis scellage des deux films autour de chaque dose individuelle, et découpage de ces dernières.

Les procédés connus présentent l'inconvénient de limiter la cadence de fabrication réalisée en raison du mode de mise en oeuvre d'une ou plusieurs des étapes précitées. Le premier facteur limitant la vitesse de réalisation est la dépose de doses individuelles sur le film inférieur : cette étape requiert l'utilisation de dispositifs effectuant des dépôts de produit présentant des dimensions, un volume et un contour très précis et qui ne sont pas compatibles avec de très hautes cadences. En tout état de cause, un tel dosage séquentiel, ou intermittent, est intrinsèquement moins rapide qu'un dosage continu.

Dans d'autres cas, le facteur limitant est constitué par le mode de mise en oeuvre du scellage. On distingue alors deux possibilités : soit la technique de scellage impose l'arrêt à intervalles réguliers du défilement des films (notamment entre chaque dose) pour permettre le scellage dans de bonnes conditions, soit la technique utilisée permet le défilement continu des films, mais à des vitesses relativement faibles pour conserver un temps de mise en oeuvre du scellage suffisant.

Il est également connu un procédé permettant la fabrication de conditionnements individuels, ou monodoses, de forme tubulaire, couramment appelés « sticks ». Ce procédé est aujourd'hui principalement mis en oeuvre dans l'industrie agroalimentaire (par exemple pour les sachets individuels de sucre, de café soluble...). Le procédé de fabrication de sticks met en oeuvre les étapes suivantes :
- une bobine de film plastique thermosoudant est déroulée puis coupée en bandes longitudinales par des lames rotatives, la largeur de chaque bande déterminant la largeur finale des sticks ;
- une fois coupé dans sa longueur, le film arrive sur un dispositif conformateur qui joint les bords chair contre chair puis réalise une soudure longitudinale ;
- chaque stick ainsi formé est entraîné vers le bas par des mâchoires de soudure horizontales qui réalisent une soudure transversale ;
- le stick est rempli et l'ouverture supérieure est fermée par une soudure transversale ;

Les cadences réalisables avec un tel procédé sont limitées par la nature même de ce dernier. En effet, toutes les machines mettant en oeuvre un tel procédé subissent la contrainte de devoir opérer un remplissage dit vertical et intermittent. Ainsi, non seulement les opérations de remplissage (ou dosage) et de soudures ne sont pas effectuées en continu, c'est-à-dire sans interruption du défilement, mais, de plus, celles-ci ne peuvent en aucun cas être simultanées. Autre inconvénient, la cinématique mise en oeuvre par ce type de machine est complexe et coûteuse, et contribue également à limiter les cadences de fabrication.

L'invention part de la constatation que pour augmenter de manière significative les cadences réalisables, le procédé nouveau doit notamment permettre un défilement ininterrompu à très haute cadence du (ou des) film(s) servant à emprisonner le produit conditionné, ce défilement étant combiné à un dosage continu (ininterrompu).

Ainsi, l'invention concerne un procédé de fabrication d'un conditionnement individuel d'un produit liquide ou solide, comprenant les étapes suivantes :
- l'étape de dérouler de façon ininterrompue un premier film, ou film inférieur,
- l'étape de dérouler simultanément un second film, ou film supérieur, en vis-à-vis du film inférieur,
- l'étape de distribuer de façon continue, entre les deux films, le produit devant être conditionné,
- l'étape de simultanément former et sceller le contour de chaque conditionnement au moyen d'une soudure par ultrasons, cette soudure étant pratiquée de manière que les ultrasons expulsent le produit devant être conditionné des zones devant être soudées.

Ainsi, grâce à l'invention, il devient possible de réaliser les étapes de déroulement des films, de dépose du produit sur l'un des films et d'assemblage hermétique des films de manière continue, ininterrompue, et à très haute vitesse. Notamment, selon l'invention, la distribution du produit conditionné peut être réalisée de manière ininterrompue, sans qu'il soit nécessaire de former de doses individuelles de produit préalablement séparées, car l'action de scellage par ultrasons est réalisée de manière à chasser le produit des zones devant êtres soudées lors de l'assemblage. Cette opération est réalisée par les ultrasons sans aucune perte de produit car le produit est expulsé intégralement des zones de soudure vers les zones de conditionnement.

Le choix d'une technique de scellage à base d'ultrasons permet d'atteindre le double objectif de réaliser une soudure à très haute vitesse tout en conservant une qualité de scellage optimale. En effet, la soudure est d'autant plus efficace que les films sont propres, et l'action des ultrasons permet de chasser intégralement le produit des zones devant être scellées. Ainsi, les zones concernées des films sont totalement exemptes de la moindre trace de produit avant soudure. Enfin, comparée à d'autres techniques de soudure, la soudure par ultrasons permet d'injecter de l'énergie avec un taux de transfert élevé. Cette technique offre donc un rendement élevé, permettant un scellage localisé et rapide, sans destruction des films.

En mettant en oeuvre le procédé selon l'invention, on obtient des vitesses de défilement des films de l'ordre de 40 mètres par minute, ce qui permet d'obtenir des cadences de fabrication huit fois plus importantes qu'avec les procédés connus, à largeur de film identique. A production égale, le prix de revient de la fabrication est donc diminué d'autant.

Outre une grande amélioration de la productivité, grâce à des vitesses de déroulement de film accrues, l'invention offre également une meilleure qualité du produit fini : par exemple, contrairement aux procédés connus, on peut conditionner un produit, liquide ou non, sans que le conditionnement final ne contienne la moindre quantité d'air résiduelle. Cela représente un grand avantage, notamment dans le domaine pharmaceutique, où la présence d'air dans les conditionnements oblige les laboratoires à incorporer des conservateurs ou des pièges à oxygène dans les médicaments.

Enfin, l'invention peut être mise en oeuvre avec des cinématiques de fonctionnement moins complexes que les procédés connus, ce qui procure encore des avantages relatifs à la maintenance et au nettoyage des machines de fabrication et autorise des changements de format rapides.

Dans une réalisation, l'étape de former et sceller les conditionnements comprend l'étape de réaliser en continu un scellage longitudinal et l'étape de réaliser à intervalles réguliers un scellage transversal des deux films au moyen d'une soudure par ultrasons. Dans une réalisation, le scellage longitudinal des deux films est réalisé sur au moins trois voies, de manière que le procédé permet d'obtenir plusieurs conditionnements individuels dans la largeur des films.

Dans une réalisation, le scellage longitudinal est réalisé par soudure par ultrasons.

Dans une réalisation, le scellage longitudinal est réalisé par thermoscellage.

Dans une réalisation, l'étape de scellage longitudinal est réalisée avant l'étape de distribution du produit, déterminant ainsi un ou plusieurs canal(aux) à l'intérieur duquel (desquels) on vient injecter le produit.

Dans une réalisation, l'injection du produit est réalisée au moyen d'une pluralité de canules d'alimentation, au moins une par canal.

Dans une réalisation, la distribution du produit est réalisée soit par gravité, soit sous pression, soit au moyen d'une pompe péristaltique qui permet de garantir une asepsie totale, dans la mesure où le produit n'est pas en contact avec le corps de pompe, et permet un contrôle précis des débits.

Dans une réalisation, les films inférieur et supérieur sont des films plastiques ou des complexes pouvant être soudés.

L'invention concerne également un dispositif de fabrication mettant en oeuvre le procédé défini ci-dessus.

Un exemple de réalisation de l'invention est décrit de manière non limitative, en relation avec les figures annexées dans lesquelles :
- la figure 1 représente un schéma général d'un dispositif mettant en oeuvre les étapes du procédé de l'invention,
- la figure 2 représente une portion de la surface d'un cylindre de soudure par ultrasons pouvant être mise en oeuvre par le procédé selon l'invention,
- la figure 3 représente un produit intermédiaire obtenu grâce au dispositif de la figure 1,
- la figure 4 représente un produit intermédiaire, obtenu avec une méthode de soudure différente de celle de la figure 3.

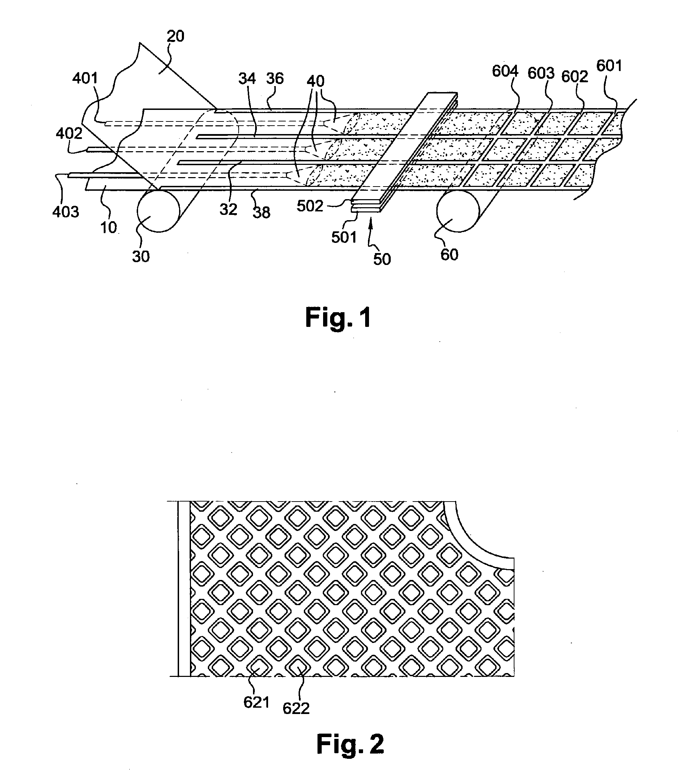

Sur la figure 1 sont schématisées les différentes étapes du procédé de fabrication selon l'invention. Un premier film 10, dit film inférieur, est déroulé de manière continue, ininterrompue, à haute vitesse, par exemple de 40 mètres par minute. Un deuxième film, ou film supérieur 20, est déroulé en vis-à-vis du premier film 10, à la même vitesse. Le deuxième film 20 est ensuite plaqué sur le premier film 10, puis un premier cylindre de soudure par ultrasons 30 est mis en oeuvre. Ce cylindre 30 est consacré à la réalisation de soudures ultrasons étanches longitudinales des deux films, c'est-à-dire des soudures dans une direction sensiblement parallèle à la direction de défilement des films. Le cylindre 30 permet également de réaliser plusieurs soudures longitudinales intermédiaires 32, 34, 36, 38. Ces soudures intermédiaires délimitent plusieurs cavités, ou canaux, destinées à être remplies par le produit à conditionner. Le nombre de cavités pratiquées détermine le nombre de conditionnements final obtenu sur la largeur, appelée laize, des films 10, 20, c'est-à-dire dans une direction sensiblement perpendiculaire à leur direction de défilement.

Dans une variante de réalisation, les soudures longitudinales peuvent être réalisées au moyen de tout autre technique, par exemple par soudure thermique, étant donné que les surfaces des deux films ne présentent aucune quantité de produit lors de cette étape. On pourra également choisir d'obtenir des soudures de qualité différentes selon leur direction, par exemple une soudure longitudinale faible combinée à des soudures transversales fortes. Une telle configuration est par exemple utile lorsqu'on souhaite obtenir un conditionnement unique contenant deux composants préalablement séparés, mais destinés à être ultérieurement mis en contact lors de leur utilisation. Leur mise en contact est alors réalisée en faisant céder la soudure dite faible, le conditionnement conservant quant à lui intégralement son étanchéité grâce aux soudures dites fortes.

On réalise ensuite l'injection du produit liquide ou visqueux devant être conditionné simultanément dans chaque canal, au moyen de canules 40 d'alimentation, ou filières. Ces canules sont alimentées via des canalisations 401, 402, 403 par des réservoirs, soit par gravité, soit sous pression au moyen d'un gaz inerte, ou encore au moyen de pompes volumétriques, notamment au moyen de pompes péristaltiques. Dans ce cas, on pourra choisir d'utiliser en guise de réservoir une poche souple en matière plastique à usage unique pour garantir une asepsie totale.

L'injection du produit est continue et ininterrompue : le débit n'est jamais nul. Si chaque canule dispose d'un réservoir d'alimentation propre, on peut ainsi conditionner simultanément à partir d'un même film des produits différents puisque l'injection se fait directement dans les canaux séparés de manière étanche. Dans le cas contraire, on peut évidemment utiliser un réservoir commun à l'ensemble des canules d'alimentation.

Dans une variante, chaque canule présente une extrémité aplatie de largeur proche de la largeur du canal correspondant, le produit étant alors réparti de manière optimale sur la largeur de chaque canal.

L'injection du produit se fait par gavage, de manière à chasser tout l'air présent dans les canaux et de manière que chaque canal soit suffisamment rempli. De préférence, à l'issue de l'injection, le produit est en légère surpression entre les parois intérieures des films 10, 20, ce qui permet d'assurer un remplissage optimal. Postérieurement à l'injection du produit, un dispositif de surveillance du niveau de remplissage permet de réguler l'alimentation de chaque canule.

Dans une variante, les canules d'alimentation peuvent être pourvues d'un moyen, tel qu'un joint torique, faisant étanchéité respectivement avec chaque canal correspondant, permettant ainsi d'injecter le produit liquide ou visqueux sous pression. Dans ce cas, un orifice sera prévu sur chaque canule pour évacuer l'air présent dans le canal correspondant. En addition, un système d'aspiration de l'air pourra être prévu pour améliorer l'efficacité du remplissage.

Le système utilisé pour l'injection du produit permet de garantir une meilleure asepsie par rapport aux procédés connus, ainsi qu'une maintenance et un nettoyage simplifiée. En effet, l'injection au moyen de canules dispense d'utiliser des éléments mécaniques tels que des pompes et des électrovannes. Dans une variante, une réponse encore meilleure est donnée à ces problèmes grâce à l'utilisation d'éléments jetables pour les réservoirs, les canules d'alimentation, et tout autre élément destiné à contenir ou à transporter le produit devant être conditionné.

En aval du dispositif de surveillance intervient un dispositif 50 de compression, qui permet de réguler l'épaisseur et la pression du produit contenu entre les deux films. Ce dispositif sert ainsi à réguler de manière fine l'épaisseur et le poids final de chaque conditionnement individuel obtenu, et notamment d'obtenir une reproductibilité parfaite de ces paramètres. Dans l'exemple, le dispositif 50 comprend deux plaques de pression 501, 502, qui pincent les deux films 10, 20. L'écartement et l'angle formé par ces deux plaques sont réglables et permettent d'influer sur les paramètres d'épaisseur et de pression du produit contenu entre les deux films 10, 20. Ce dispositif 50 permet également d'égaliser la répartition transversale du produit à l'intérieur de chaque canal. Dans une variante, le dispositif 50 est réalisé au moyen d'un couple de cylindres, éventuellement tournants, disposés en vis-à-vis de part et d'autre des deux films 10 et 20.

En aval du dispositif 50, est disposé un deuxième cylindre 60 de soudure par ultrasons, qui réalise des soudures transversales 601, 602, 603, 604 à intervalles réguliers. La technique de soudure par ultrasons permet de chasser le produit des zones des films devant être soudées. L'assemblage obtenu est ainsi parfaitement hermétique. A l'issue de cette dernière étape, les conditionnements individuels de produits sont délimités et fermés hermétiquement, mais ils sont encore liés les uns aux autres. L'intervalle entre deux soudures transversales détermine, avec la largeur des canaux, les dimensions finales de chaque conditionnement. La figure 2 montre une portion de la surface du cylindre 60, correspondant à une zone de soudure. Les zones destinées à la soudure à la surface du cylindre présentent une répartition de creux 621, 622,..., La densité du maillage et la forme de ces creux déterminent, avec le temps de contact, la qualité finale de la soudure réalisée.

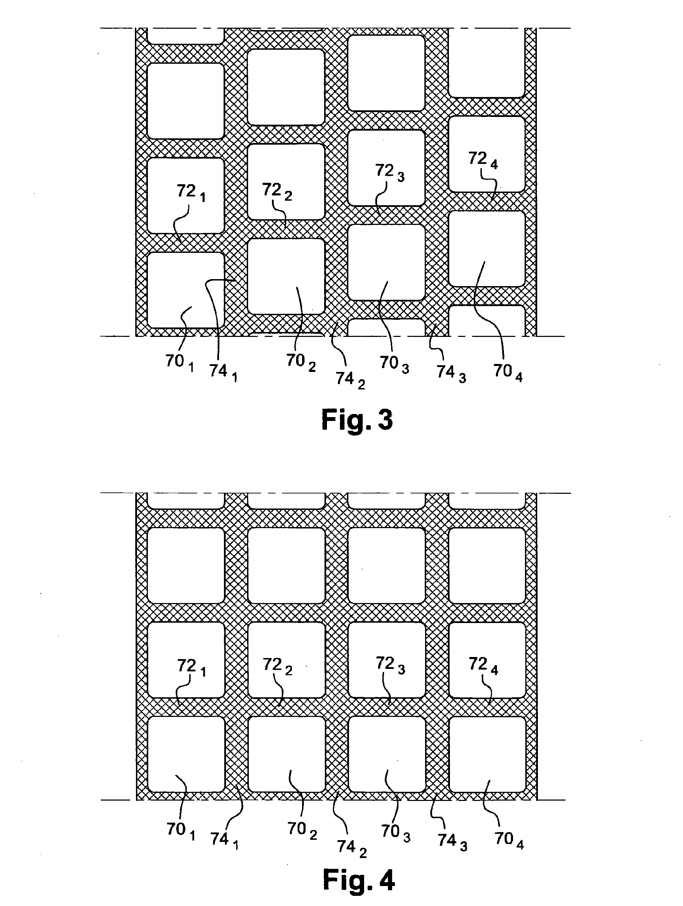

Les figures 3 et 4 représentent chacune un produit intermédiaire du procédé de l'invention, obtenu selon un mode de mise en oeuvre de la soudure par ultrasons différent.

La figure 3 montre les différents conditionnements 70₁, 70₂,... déjà formés et scellés, avant découpe. Dans cet exemple, les soudures longitudinales 74₁, 74₂... et transversales 72₁, 72₂... ont été réalisées simultanément, grâce à un cylindre de soudure unique. Pour optimiser le temps de contact et l'énergie fournie par le cylindre, les soudures transversales 72₁, 72₂... sont décalées et sont donc réalisées consécutivement par le cylindre de soudure.

La figure 4 montre le même schéma, mais dans le cas où on utilise deux cylindres de soudures différents, l'un affecté à la réalisation des soudures transversales, l'un à la réalisation de soudures longitudinales. Dans cet exemple, les conditionnements peuvent être alignés sur la direction transversale car l'énergie nécessaire pour réaliser l'ensemble des soudures est répartie sur les deux cylindres.

Dans une variante de réalisation, on peut utiliser un dispositif guide (non représenté) qui permet une séparation préalable du gel aux endroits devant être soudés, ce dispositif intervenant avant le cylindre 60. Un tel dispositif sera particulièrement utile lorsque l'épaisseur de produit est importante.

Les conditionnements sont ensuite soumis à une étape de façonnage, cette étape comprenant au mois l'une des opérations suivantes :
- la découpe selon une forme prédéterminée de chaque conditionnement,
- la prédécoupe selon une forme prédéterminée de chaque conditionnement,
- la découpe d'un nombre prédéterminé de conditionnements,
- la prédécoupe d'un nombre prédétermine de conditionnements.

Dans une variante de réalisation de l'invention, la surface des cylindres de soudure par ultrasons 30, 60 peuvent être parcourues par un motif en relief tel que représenté à la figure 2. Un tel motif est réalisé par perçage d'une pluralité de trous régulièrement espacés à la surface extérieure du cylindre. Ainsi lors de la soudure des films, ce motif est imprimé en relief sur les zones soudées, leur donnant un aspect rugueux. Cette rugosité permet de renforcer l'étanchéité et résistance des soudures pratiquées.

Dans une autre variante de réalisation, on utilise en aval du deuxième cylindre 60 un troisième cylindre de soudure par ultrasons. Ce troisième cylindre 70 permet d'effectuer des soudures additionnelles sur les conditionnements individuels déjà fermés. Par exemple, on peut augmenter la pression interne du conditionnement en diminuant ses dimensions (et donc son volume interne) par de nouvelles soudures longitudinales et/ou transversales. On peut également choisir d'effectuer une soudure dont le dessin représente un motif particulier, permettant d'obtenir un conditionnement présentant un motif en relief grâce à l'alternance de zones soudées (donc plates) et de zones non soudées (épaisses car remplies de produit).

Le procédé selon l'invention est applicable à tous types de films, et en particulier les films plastiques et les films aluminisés. Les films utilisés peuvent être transparents, imprimés totalement ou partiellement. Dans une variante, un ou plusieurs modules d'impression peuvent être intégrés sur une machine mettant en oeuvre le procédé selon l'invention, ceux-ci intervenant de préférence avant que les films ne soient réunis.

L'utilisation d'un complexe autoadhésif comme film inférieur constitue une application intéressante de l'invention, en permettant la fabrication de conditionnements individuels sous la forme d'étiquettes autocollantes, destinés par exemple à être utilisé comme témoins de conservation.

Le dispositif selon l'invention peut être conçu de manière à fonctionner soit de manière horizontale, comme représenté à la figure 1, soit de manière verticale, les films défilant alors de haut en bas, soit de manière oblique. Cette dernière disposition permet notamment de faciliter le remplissage des canaux grâce à l'écoulement naturel de l'air vers le haut.

Les produits obtenus grâce au procédé et au dispositif selon l'invention couvrent un champ très large. Les films utilisés, de largeur notamment comprise entre 50 millimètres et un mètre, permettent d'obtenir des dosages de produit compris entre 1 millilitre et un litre. Les dimensions finales de chaque conditionnement vont de l'ordre de 10 millimètres à plus de 300 millimètres.

L'invention peut être appliquée à nombreux domaines nécessitant la production de doses ou d'ensemble de doses individuelles d'un produit liquide et/ou visqueux ou d'un produit conditionné en poudre. On cite par exemple les échantillons de produits cosmétiques, de parfums, de produits d'hygiène, de médicaments, les témoins de fraîcheur ou de conservation de produits, notamment alimentaires...

## Revendications

1. Procédé de fabrication d'un conditionnement contenant une dose individuelle d'un produit liquide ou visqueux ou en poudre, comprenant les étapes suivantes :
- l'étape de dérouler de façon ininterrompue un premier film, ou film inférieur,
- l'étape de dérouler simultanément un second film, ou film supérieur, en vis-à-vis du film inférieur,
- l'étape de distribuer de façon continue entre les deux films le produit devant être conditionné, sans former de doses individuelles de produit préalablement séparées,
- l'étape de simultanément former et sceller le contour de chaque conditionnement, de manière qu'il soit fermé hermétiquement, au moyen d'une soudure par ultrasons, cette soudure étant pratiquée de manière que les ultrasons expulsent le produit des zones devant être soudées vers les zones de conditionnement.

2. Procédé selon la revendication 1, dans lequel l'étape de former et sceller les conditionnements comprend l'étape de réaliser à intervalles réguliers un scellage transversal des deux films au moyen d'une soudure par ultrasons et l'étape de réaliser en continu un scellage longitudinal.

3. Procédé selon la revendication 2, dans lequel le scellage longitudinal des deux films est réalisé sur au moins trois voies, de manière que le procédé permet d'obtenir plusieurs conditionnements individuels dans la largeur des films.

4. Procédé selon la revendication 2 ou 3, dans lequel le scellage longitudinal est réalisé par soudure par ultrasons.

5. Procécé selon la revendication 2 ou 3, dans lequel lé scellage longitudinal est réalisé par thermoscellage.

6. Procédé selon l'une des revendications 3 à 5, dans lequel l'étape de scellage longitudinal est réalisée avant l'étape de distribution du produit, déterminant ainsi un ou plusieurs canal (aux) à l'intérieur duquel (desquels) on vient injecter le produit.

7. Procédé selon la revendication 6, dans lequel l'injection du produit est réalisée au moyen d'une pluralité de canules d'alimentation, au moins une par canal.

8. Procédé selon l'une des revendications précédentes, dans lequel la distribution du produit est réalisée soit par gravité, soit sous pression.

9. Procédé selon l'une des revendications précédentes, dans lequel les films inférieur et supérieur sont des films plastiques.

10. Dispositif de fabrication mettant en oeuvre le procédé selon l'une des revendications 1 à 9.

## Claims

1. A method for manufacturing a packaging item containing an individual dose of a liquid, viscous or powder product, comprising the following steps:
- the step of uninterruptedly unwinding a first film, or lower film,
- the step of simultaneously unwinding a second film, or upper film, opposite the lower film,
- the step of continuously dispensing the product being packaged between the two films, without forming previously separated individual doses of product,
- the step of simultaneously forming and sealing the edge of each packaging item in order to achieve an airtight seal, by means of ultrasonic welding, this welding operation being carried out so that the ultrasounds eject the product from the zones being welded and into the packaging zones.

2. A method according to claim 1, wherein the step of forming and sealing the packaging items comprises the step of carrying out the transversal sealing of the two films at regular intervals, by means of ultrasonic welding and the step of producing a longitudinal continuous seal.

3. A method according to claim 2, wherein the longitudinal sealing operation of the two films is performed over at least three paths, so that the method allows for several individual packaging items to be obtained within the width of the films.

4. A method according to claim 2 or 3, wherein the longitudinal sealing operation is performed by ultrasonic welding.

5. A method according to claim 2 or 3, wherein the longitudinal sealing operation is performed by heat sealing.

6. A method according to one of claims 3 to 5, wherein the longitudinal sealing step is performed before the product dispensing step, thus determining one or several channel(s) into which the product shall be injected.

7. A method according to claim 6, wherein the product is injected by means of a plurality of dosing cannulas, at least one per channel.

8. A method according to one of the previous claims, wherein the product is dispensed either by gravity or under pressure.

9. A method according to one of the previous claims, wherein the lower and upper films are plastic films.

10. A manufacturing device implementing the method according to one of claims 1 to 9.

## Patentansprüche

1. Herstellungsverfahren einer Verpackung, das eine individuale Portion eines flüssigen, dickflüssigen oder pulvrigen Mittels beinhaltet, bestehend aus folgenden Etappen:
- die Etappe ununterbrochen eine erste Folie oder untere Folie abzuwickeln,
- die Etappe, gleichzeitig eine zweite Folie oder obere Folie der unteren gegenüberliegenden Folie abzuwickeln,
- die Etappe, ununterbrochen zwischen der beiden Folien das Mittel, das verpackt werden soll, ohne vorab getrennte individuale Portionen des Mittels zu bilden, zu verteilen,
- die Etappe, gleichzeitig die Kontur jeder Verpackung zu bilden und zu siegeln, so dass sie mittels einer Ultraschallschweißung hermetisiert ist, wobei diese Schweißung vorgenommen ist, so dass die Ultraschallen das Mittel aus den Bereichen, die verschweißt werden müssen Richtung Verpackungsbereichen ausstoßen.

2. Verfahren nach Anspruch 1, in welchem die Etappe Verpackungen zu bilden und zu siegeln aus der Etappe, um in regelmäßigen Zeitabschnitten eine Quersiegelung der beiden Folien mittels einer Ultraschallschweißung durchzuführen und der Etappe, um ununterbrochen eine Längssiegelung durchzuführen, besteht.

3. Verfahren nach Anspruch 2, in welchem die Längssiegelung der beiden Folien auf mindestens drei Spuren durchgeführt wird, so dass das Verfahren ermöglicht, mehrere in der Folienbreite individualen Verpackungen zu erhalten.

4. Verfahren nach Anspruch 2 oder 3, in welchem die Längssiegelung durch Ultraschallschweißung durchgeführt wird.

5. Verfahren nach Anspruch 2 oder 3, in welchem die Längssiegelung durch Heißsiegelung durchgeführt wird.

6. Verfahren nach einem der Ansprüche 3 bis 5, in welchem die Längssiegelungsetappe vor der Verteilungsetappe des Mittels durchgeführt wird, wobei es somit einen Kanal oder mehrere Kanäle bestimmt, in welchem (welchen) man das Mittel einspritzt.

7. Verfahren nach Anspruch 6, in welchem das Einspritzen des Mittels durch eine Vielzahl von Versorgungskanülen, mindestens eine pro Kanal, durchgeführt wird.

8. Verfahren nach einem der vorherigen Ansprüche, in welchem die Verteilung des Mittels entweder durch Gravitation oder unter Druck durchgeführt wird.

9. Verfahren nach einem der vorherigen Ansprüche, in welchem die unteren und oberen Folien Plastikfolien sind.

10. Herstellungsvorrichtung, die das Verfahren nach einem der Ansprüche 1 bis 9 einsetzt.
